# DEMANDE DE BREVET EUROPEEN

(11) **EP 2 469 352 A1**
(43) Date de publication de la demande: **27.06.2012**
(21) Numéro de dépôt: 10196585.3
(22) Date de dépôt: 22.12.2010
(51) Int. Cl.: G04B 13/02, G04B 17/32, G04B 17/34, B81C 3/00, G04B 15/14, G04D 1/00, G04D 3/04

(54) **Assemblage d'une pièce ne comportant pas de domaine plastique**

(71) Demandeur: Nivarox-FAR S.A., 2400 Le Locle (CH)
(72) Inventeur: Verardo, Marco, 2336, Les Bois (CH); Cusin, Pierre, 1423, Villars-Burquin (CH); Queval, Arthur, 2000, Neuchâtel (CH)
(74) Mandataire: Couillard, Yann Luc Raymond

(57) **Abrégé**

L'invention se rapporte à un assemblage d'un organe (5, 15) s'étendant axialement en un premier matériau dans l'ouverture (4) d'une pièce en un deuxième matériau ne comportant pas de domaine plastique. Selon l'invention, ledit organe comporte une partie (7, 27, 27', 27", 27"') déformée élastiquement et plastiquement qui serre radialement (B) la paroi de ladite pièce entourant l'ouverture (4) afin de contraindre élastiquement la pièce (3) pour solidariser l'assemblage de manière non destructive pour ladite pièce.

L'invention concerne notamment le domaine des pièces d'horlogerie.

## Description

### Domaine de l'invention

L'invention se rapporte à un assemblage d'une pièce dont le matériau ne comporte pas de domaine plastique avec un organe comportant un autre type de matériau.

### Arrière plan de l'invention

Les assemblages actuels comportant une pièce à base de silicium sont généralement solidarisés par collage. Une telle opération nécessite une extrême finesse d'application ce qui la rend coûteuse.

Le document EP 2 107 433 divulgue une première pièce faite à base silicium qui est assemblée sur une pièce intermédiaire métallique le tout étant ensuite assemblé sur un axe en métal. Toutefois, les formes de réalisation proposées dans ce document ne sont pas satisfaisantes et, soit, entraînent le bris de la pièce à base de silicium lors de son assemblage, soit, solidarisent insuffisamment les pièces entre elles.

En effet, dans ce document, une extrémité de la pièce intermédiaire est repliée sur la partie en silicium en générant des contraintes uniquement axiales ce qui a pour conséquence de briser la pièce en silicium. De plus, le document propose l'utilisation de facettage ce qui entraîne une répartition non uniforme de la contrainte sur le silicium causant également le bris de la pièce en silicium.

### Résumé de l'invention

Le but de la présente invention est de pallier tout ou partie les inconvénients cités précédemment en proposant un assemblage sans colle capable de solidariser une pièce dont le matériau ne comporte pas de domaine plastique avec un organe comportant un matériau ductile comme, par exemple, un métal ou un alliage métallique.

A cet effet, l'invention se rapporte à un assemblage d'un organe s'étendant axialement en un premier matériau dans l'ouverture d'une pièce en un deuxième matériau ne comportant pas de domaine plastique caractérisé en ce que ledit organe comporte une partie déformée élastiquement et plastiquement qui serre radialement la paroi de ladite pièce entourant l'ouverture afin de contraindre élastiquement la pièce pour solidariser l'assemblage de manière non destructive pour ladite pièce.

Cette configuration permet avantageusement de solidariser l'ensemble pièce ― organe sans collage avec un organe habituel à la précision maîtrisée tout en garantissant que la pièce ne subisse pas d'efforts destructifs même si elle est formée, par exemple, à partir de silicium monocristallin.

Conformément à d'autres caractéristiques avantageuses de l'invention :
- la paroi externe de la partie déformée est sensiblement de forme correspondante à l'ouverture de la pièce afin d'exercer une contrainte radiale sensiblement uniforme sur la paroi de la pièce entourant ladite ouverture ;
- l'ouverture de la pièce est circulaire ;
- l'ouverture de la pièce est asymétrique afin d'éviter les déplacements relatifs entre les éléments dudit assemblage ;
- le deuxième matériau est à base de silicium monocristallin ;
- l'ouverture comporte une section comprise entre 0,5 et 2 mm.

De plus, l'invention se rapporte à une pièce d'horlogerie caractérisée en ce qu'elle comporte un assemblage selon l'une des variantes précédentes.

Enfin, l'invention se rapporte à un procédé d'assemblage d'un organe en un premier matériau dans une pièce en un deuxième matériau ne comprenant pas de domaine plastique, ledit procédé comportant les étapes suivantes :
a) former la pièce avec une ouverture ;
b) introduire sans contrainte, dans l'ouverture, une partie de l'organe ;
c) déformer élastiquement et plastiquement la partie dudit organe dans l'ouverture par rapprochement de deux outils afin d'exercer une contrainte radiale contre la paroi de la pièce entourant l'ouverture en sollicitant la déformation élastique de la pièce pour solidariser l'assemblage de manière non destructive pour ladite pièce.

Ce procédé permet avantageusement de solidariser radialement l'organe et la pièce sans qu'aucun effort axial ne soit appliqué sur la pièce. En effet, de manière avantageuse selon l'invention, seule une déformation élastique uniforme et radiale est appliquée sur la pièce. Enfin, un tel procédé permet de solidariser l'ensemble pièce ― organe en s'adaptant aux dispersions de fabrication des différents constituants.

Conformément à d'autres caractéristiques avantageuses de l'invention :
- la paroi externe de la partie dudit organe dans l'ouverture est sensiblement de forme correspondante à l'ouverture de la pièce afin d'exercer une contrainte radiale sensiblement uniforme sur la paroi de la pièce entourant l'ouverture ;
- l'ouverture de la pièce est circulaire ;
- l'ouverture de la pièce est asymétrique afin d'éviter les déplacements relatifs entre les éléments dudit assemblage ;
- lors de l'étape b), la différence entre la section de l'ouverture et la section externe de la partie dudit organe dans l'ouverture est d'environ 10 µm ;
- lors de l'étape c), la déformation exerce un serrage compris entre 8 et 20 µm ;
- lors des étapes b) et c), la partie de l'organe dans l'ouverture est maintenue dans l'ouverture à l'aide d'un des deux outils ;
- lors de l'étape b), la partie dudit organe dans l'ouverture comporte un évidement conique afin, lors de l'étape d), de faciliter l'orientation radiale (B) de la contrainte induite par la déformation de ladite partie ;
- le deuxième matériau est formé à base de silicium ;
- le premier matériau est formé à base de métal ou d'alliage métallique ;
- la pièce peut être, par exemple, un mobile d'horlogerie, une ancre d'horlogerie, un spiral d'horlogerie, un résonateur ou encore un MEMS.

### Description sommaire des dessins

D'autres particularités et avantages ressortiront clairement de la description qui en est faite ci-après, à titre indicatif et nullement limitatif, en référence aux dessins annexés, dans lesquels :
- les figures 1 et 2 sont des représentations schématiques d'étapes successives du procédé d'assemblage selon l'invention ;
- les figures 3 et 4 sont des représentations en coupe vues de face ou en perspective de la partie intermédiaire selon l'invention ;
- les figures 5 et 6 sont des représentations d'étapes alternatives du procédé d'assemblage selon l'invention ;
- les figures 7 à 10 sont des représentations de variantes de la partie intermédiaire selon l'invention.

### Description détaillée des modes de réalisation préférés

Comme expliqué ci-dessus, l'invention se rapporte à un assemblage et son procédé destinés à solidariser un matériau fragile, c'est-à-dire ne comportant pas de domaine plastique comme un matériau à base de silicium monocristallin, avec un matériau ductile comme un métal ou un alliage métallique.

Cet assemblage a été imaginé pour des applications dans le domaine horloger. Toutefois, d'autres domaines peuvent parfaitement être imaginés comme notamment l'aéronautique, la bijouterie, l'automobile ou les arts de la table.

Dans le domaine horloger, cet assemblage est rendu nécessaire par la part croissante que tiennent les matériaux fragiles comme ceux à base de silicium, de quartz, de corindon ou plus généralement de céramique. On peut, à titre d'exemple, envisager de former le spiral, le balancier, l'ancre, les ponts ou même les mobiles comme les roues d'échappement totalement ou partiellement à base de matériaux fragiles.

Toutefois, le fait de toujours pouvoir utiliser des axes habituels en acier dont la fabrication est maîtrisée, est une contrainte qui est difficile à concilier avec l'utilisation de pièces ne comportant pas de domaine plastique. En effet, lors de tests effectués, le chassage d'un axe en acier est impossible et brise systématiquement les pièces fragiles, c'est-à-dire ne comportant pas de domaine plastique. Par exemple, il est apparu que le cisaillement généré par l'entrée de l'axe métallique dans l'ouverture d'une pièce en silicium brise systématique cette dernière.

Dans le domaine de l'horlogerie, un préjugé technique tend ainsi à considérer qu'il ne faut pas dépasser une contrainte comprise entre 300 et 450 MPa sur une pièce en silicium sous peine de briser cette dernière. Cette échelle de valeur est estimée théoriquement à partir du module d'Young caractérisant le domaine élastique du silicium.

Par conséquent, pour les cas où les contraintes estimées dépassent cette plage entre 300 et 450 MPa, des moyens de déformation élastique formés par des ajourages traversants dans le silicium ont alors été développés comme ceux divulgués dans les documents EP 1 445 670, WO 2006/122873 et WO 2007/099068.

Lors de tests supplémentaires effectués en déformant une partie intermédiaire et en augmentant au fur et à mesure la contrainte appliquée sur la partie en silicium, il est apparu, de manière étonnante, que la pièce en silicium pouvait supporter en fait une contrainte bien supérieure avant qu'une amorce de rupture soit détectée. Ainsi, de manière inattendue, les tests ont été prolongés jusqu'à une plage de contrainte comprise entre 1,5 et 2 GPa sans rupture, c'est-à-dire bien au-delà du préjugé technique s'étendant entre 300 à 450 MPa. Par conséquent, de manière étendue, les matériaux fragiles tels que le silicium, de quartz, de corindon ou plus généralement de céramique ne suivent pas nécessairement les modèles statistiques de pièces fragiles habituellement utilisés.

C'est pourquoi, l'invention se rapporte à un assemblage entre un organe en un premier matériau, par exemple ductile comme l'acier, dans l'ouverture d'une pièce en un deuxième matériau ne comportant pas de domaine plastique, comme un matériau à base de silicium.

Selon l'invention, ledit organe comporte une partie déformée élastiquement et plastiquement qui serre radialement la paroi de ladite pièce entourant l'ouverture afin de contraindre élastiquement la pièce pour solidariser l'assemblage de manière non destructive pour ladite pièce.

De plus, de manière préférée, la paroi externe de la partie de l'organe présente dans l'ouverture est sensiblement de forme correspondante à l'ouverture de la pièce afin d'exercer une contrainte radiale sensiblement uniforme sur la paroi de la pièce entourant ladite ouverture. En effet, lors des recherches effectuées, il est apparu préférable que la partie de l'organe présente dans l'ouverture répartisse de manière uniforme les contraintes radiales induites par sa déformation sur la paroi de la pièce entourant l'ouverture.

Par conséquent, si l'ouverture dans la pièce fragile est circulaire, il est préférable que la paroi externe de la partie de l'organe présente dans l'ouverture soit en forme sensiblement de cylindre continu, c'est-à-dire sans fente radiale ou ajourage axial, est utile pour éviter les contraintes localisées sur une faible surface de la paroi de la pièce entourant l'ouverture qui sont propres à briser la matière fragile.

Par conséquent, la partie de l'organe présente dans l'ouverture avec une forme correspondante à l'ouverture peut s'interpréter, si la section de l'ouverture est circulaire, comme un disque plein dont la paroi externe est continue, c'est-à-dire sans rainure ou plus généralement de discontinuité de matière. La forme correspondante de la partie de l'organe présente dans l'ouverture permet donc, par déformation élastique et plastique, de générer uniquement une contrainte radiale sensiblement uniforme sur une surface maximisée de la paroi de la pièce autour de l'ouverture.

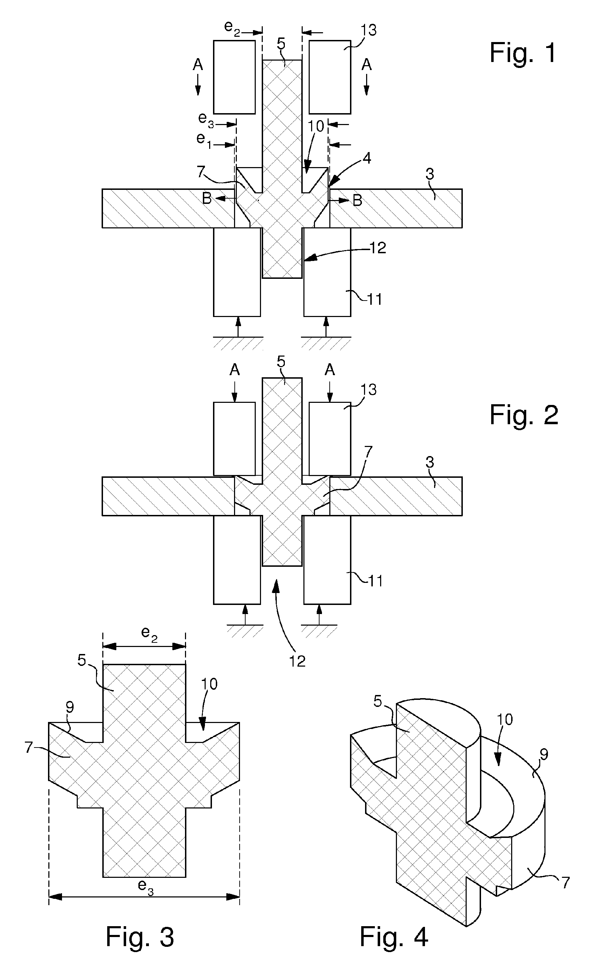

L'assemblage selon l'invention sera mieux compris en relation avec les figures 1 à 10 présentant des exemples d'assemblage.

Aux figures 1 à 4, on peut voir un premier mode de réalisation selon l'invention. Une première étape consiste ainsi à former la pièce 3 en un matériau n'ayant pas de domaine plastique avec une ouverture 4 circulaire. Comme visible à la figure 1, l'ouverture 4 comporte une section e₁, qui, préférentiellement, est comprise entre 0,5 et 2 mm.

Une telle étape peut être réalisée par gravage sous forme sèche ou humide comme, par exemple, un gravage ionique réactif profond (également connu sous l'abréviation anglaise « DRIE »).

De plus, dans une deuxième étape, le procédé consiste à former l'organe, un axe de pivotement 5 dans l'exemple des figures 1 et 2, en un deuxième matériau avec une section principale e₂ et une partie 7 destinée à être déformée avec une section maximale e₃. La partie 7 peut comporter une épaisseur comprise entre 100 et 600 µm. Comme expliqué ci-dessus, la deuxième étape peut être réalisée selon les processus habituels de fabrication d'axes. L'organe 5 est préférentiellement métallique et peut, par exemple, être formé en acier.

Bien entendu, les deux premières étapes n'ont pas de consécutivité à respecter et peuvent même être réalisées en même temps.

Dans une troisième étape, la partie 7 est introduite sans contact dans l'ouverture 4. Cela signifie comme visible à la figure 1 que la section e₁ de l'ouverture 4 est plus grande ou égale à la section externe e₃ de la partie 7 de l'organe 5.

De manière préférée, la différence entre la section e₁ de l'ouverture 4 et la section externe e₃ de la partie 7 est d'environ 10 µm, c'est-à-dire un insterstice d'environ 5 µm qui sépare la pièce 3 par rapport à la partie 7 de l'organe 5.

De plus, préférentiellement selon l'invention, la partie 7 et, incidemment, l'organe 5, est maintenue dans l'ouverture 4 à l'aide d'un 11 des outils 11, 13 utilisés pour l'étape de déformation. Enfin, de manière préférée, l'outil 11 comporte un évidement 12 destiné à recevoir une extrémité de l'organe 5.

Enfin, le procédé comporte une quatrième étape consistant à déformer élastiquement et plastiquement la partie 7 de l'organe 5 par rapprochement des outils 11, 13 selon la direction axiale A afin d'exercer une contrainte radiale B contre la paroi de la pièce entourant l'ouverture 4 en sollicitant la déformation élastique de la pièce 3.

En effet, de manière inattendue, il n'est pas nécessaire de prévoir d'ajourages traversant l'épaisseur de la pièce 3 autour de l'ouverture 4 comme ceux divulgués dans les documents EP 1 445 670, WO 2006/122873 et WO 2007/099068 pour éviter le bris de la pièce 3. Ainsi, la pièce 3 va se déformer élastiquement même sous forte contrainte, c'est-à-dire supérieur à 450 MPa pour le silicium, sans amorce de rupture.

Ainsi, comme visible à la figure 2, le pressage de la partie 7 au niveau de ses parties supérieure et inférieure respectivement par l'outil 11 et 13 selon la direction axiale A va induire une déformation élastique et plastique de la partie 7 de manière exclusivement radiale selon la direction B, c'est-à-dire vers la pièce 3. Une fois la contrainte des outils 11, 13 relâchée, la pièce 3 exerce un retour élastique propre à définitivement solidariser l'ensemble organe 5 ― pièce 3 via la partie 7.

De manière préférée selon l'invention, la déformation est paramétrée afin que le serrage soit supérieur aux interstices entre la partie 7 non déformée et la paroi de l'ouverture 4. Préférentiellement, le serrage est compris entre 8 et 20 µm.

Par conséquent, il est voulu que la déformation élastique et plastique de la partie 7 exerce la déformation élastique de la pièce 3 autour de l'ouverture 4 afin de solidariser ensemble l'organe 5 et donc sa partie 7 déformée, avec la pièce 3 comme visible à la figure 2. Comme illustré à la figure 2, il peut également arriver que l'extrémité de la partie 7, lors de la déformation, se rabattre superficiellement au-dessus de la pièce 3 sans toutefois exercer une quelconque contrainte axiale sur la pièce 3. Enfin, il est à noter que ce mode de réalisation autorise notamment un centrage automatique de l'organe 5 par rapport à la pièce 3.

Avantageusement selon l'invention, aucun effort axial (par définition risquant d'être destructif) n'est appliqué sur la pièce 3 pendant le procédé. Seule une déformation élastique radiale maitrisée en fonction de la contrainte programmée des outils 11, 13, est appliquée sur la pièce 3. Il est également à noter que l'utilisation de la partie 7 dont la paroi externe est de forme sensiblement correspondante à l'ouverture 4 permet, lors de la déformation radiale B de la partie 7, d'exercer une contrainte uniforme sur la paroi de la pièce entourant l'ouverture 4 afin d'éviter tout bris de la pièce 3 en matériau fragile et s'adapter aux dispersions de fabrication des différents éléments.

Comme visible aux figures 3 et 4, préférentiellement, la partie 7 comporte un évidement 10 conique afin de, lors de l'étape de déformation, faciliter l'orientation radiale B de la contrainte induite par la déformation de la partie 7 mais également rendre ladite contrainte progressive. En effet, la pente 9 formant l'évidement conique 10 induit une surface de contact initiale contre l'outil 13 réduite à un cercle en obligeant la paroi externe de la partie 7 à se déformer radialement avec un serrage progressif contre la paroi de la pièce 3 entourant l'ouverture 4.

Dans l'exemple illustré aux figures 3 et 4, on voit que l'évidement conique 10 forme un méplat entre la pente 9 et le retour à l'épaisseur e₂ de l'organe 5. Cette caractéristique, c'est-à-dire que l'évidement conique 10 communique avec l'épaisseur e₂ de l'organe 5, comme montrée ci-dessous n'est toutefois pas essentielle et l'évidement 10 ainsi que sa pente 9 peuvent être de formes et de dimensions différentes.

Bien entendu, la présente invention ne se limite pas à l'exemple illustré mais est susceptible de diverses variantes et modifications qui apparaîtront à l'homme de l'art. En particulier, un blocage axial de la pièce 3 peut être apporté dans une alternative du premier mode de réalisation.

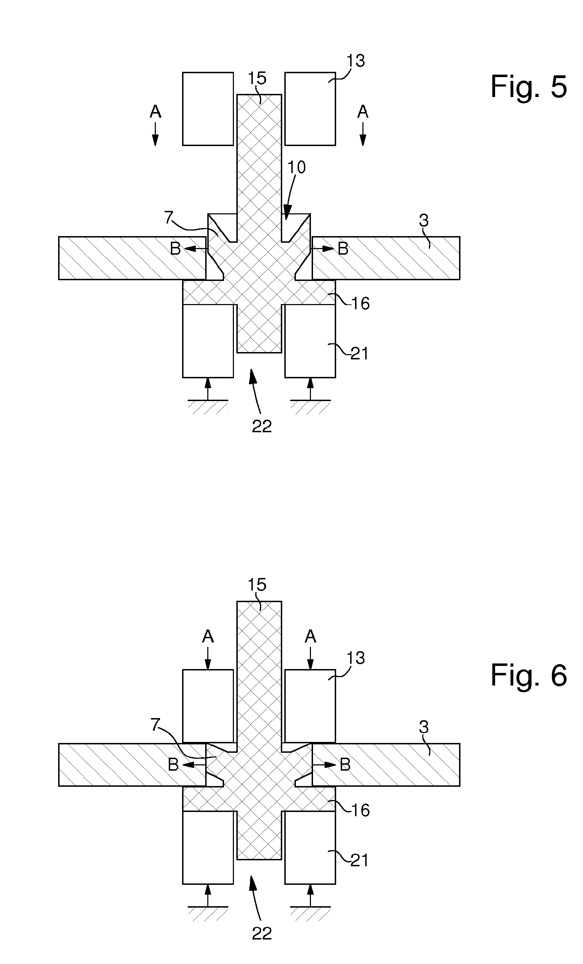

A titre d'exemple, les figures 5 et 6 présentent un deuxième mode de réalisation du procédé. Ainsi, les figures 5 et 6 présentent une alternative dans laquelle l'organe 15 est sensiblement différent de l'organe 5 en présentant une collerette 16. A ce titre, l'outil 21 en partie inférieure est modifié et comporte un trou traversant 22 de section au moins égale ou supérieure à celle de l'organe 15.

On comprend donc que la partie 7 et, éventuellement, la pièce 3 peuvent ainsi être portés par la collerette 16. De plus, la déformation de la partie intermédiaire 7 au niveau de sa partie inférieure n'est plus réalisée directement par l'outil 21 mais par l'intermédiaire de la collerette 16 sans que le procédé ne perde de son intérêt. Ainsi, la pièce 3 est sous contrainte élastique au niveau de la partie 7 et bloquée contre la collerette 16 de l'organe 15.

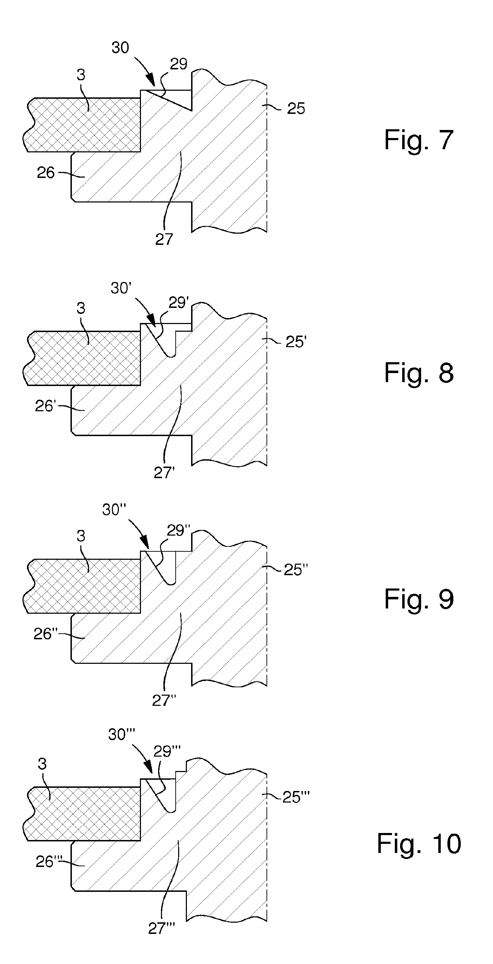

A titre d'exemple, les figures 7 à 10 présentent un troisième mode de réalisation du procédé. Ainsi, les figures 7 à 10 présentent une alternative dans laquelle la partie 27, 27', 27", 27"' est sensiblement différente de la partie 7 du premier mode de réalisation en présentant une collerette intégrée 26, 26', 26", 26"'. Par conséquent, le troisième mode de réalisation utilise les mêmes outils 21, 13 que le deuxième mode de réalisation. Ainsi, la pièce 3 sous contrainte élastique au niveau de la partie 27, 27', 27", 27"' et bloquée contre la collerette 26, 26', 26", 26"'.

Dans une première variante illustrée à la figure 7, la partie intermédiaire 27 comporte un évidement conique 30 dont la pente 29 finit directement selon l'épaisseur e₂ de l'organe 25, c'est-à-dire sans méplat.

Il est également possible, dans une deuxième variante, que la partie intermédiaire 27', 27", 27"' comporte un évidement conique 30', 30", 30"' dont la pente 29', 29", 29"' ne finit pas selon l'épaisseur e₂ de l'organe 25', 25", 25"' mais en est séparé par un anneau 31', 31 ", 31'". La hauteur de l'anneau peut ainsi être inférieure 31' à celle de l'extrémité de la pente 29', être égale 31 " à celle de l'extrémité de la pente 29" ou encore être supérieure 31 "' à celle l'extrémité de la pente 29"'. Bien entendu, pour cette deuxième variante, l'outil 13 fait vis-à-vis, lors de l'étape de déformation, à la pente 29', 29", 29"' sans entrer en contact avec l'anneau 31', 31 ", 31 "'.

Les modes de réalisation présentés ci-dessus sont susceptibles d'être combinés entre eux suivant les applications prévues. De plus, les assemblages peuvent être appliqués, de manière non exhaustive, à un élément d'une pièce d'horlogerie tel qu'une ancre, une roue d'échappement, un spiral, un balancier, un pont ou plus généralement un mobile.

Il est également possible d'utiliser l'assemblage divulgué ci-dessus en remplacement des moyens de déformation élastique 48 ou des cylindres 63, 66 du document WO 2009/115463 (lequel est incorporé par référence à la présente description) afin de fixer un résonateur du type balancier― spiral monobloc sur un axe de pivotement.

Bien entendu, deux organes tels que décrit ci-dessus peuvent également être assujettis sur le même axe à l'aide de deux assemblages distincts afin de solidariser leur mouvement respectif. On comprend alors que le même axe sera formé avec deux parties 27, 27', 27", 27"' destinées à être déformées.

Enfin, les assemblages selon l'invention peuvent également permettre la solidarisation de tout type d'organe horloger ou non dont le corps est formé d'un matériau ne comportant pas de domaine plastique (silicium, quartz, etc.) avec un axe comme, par exemple, un résonateur du type diapason ou plus généralement un MEMS (acronyme provenant des termes anglais « Micro-Electro-Mechanical System »).

## Revendications

1. Assemblage d'un organe (5, 15) s'étendant axialement en un premier matériau dans l'ouverture (4) d'une pièce en un deuxième matériau ne comportant pas de domaine plastique **caractérisé en ce que** ledit organe comporte une partie (7, 27, 27', 27", 27"') déformée élastiquement et plastiquement qui serre radialement (B) la paroi de ladite pièce entourant l'ouverture (4) afin de contraindre élastiquement la pièce (3) pour solidariser l'assemblage de manière non destructive pour ladite pièce.

2. Assemblage selon la revendication précédente, **caractérisé en ce que** la paroi externe de la partie (7, 27, 27', 27", 27"') déformée est sensiblement de forme correspondante à l'ouverture (4) de la pièce (3) afin d'exercer une contrainte radiale (B) sensiblement uniforme sur la paroi de la pièce (3) entourant ladite ouverture.

3. Assemblage selon la revendication 1 ou 2, **caractérisé en ce que** l'ouverture (4) de la pièce (3) est circulaire.

4. Assemblage selon la revendication 1 ou 2, **caractérisé en ce que** l'ouverture (4) de la pièce (3) est asymétrique afin d'éviter les déplacements relatifs entre les éléments dudit assemblage.

5. Assemblage selon l'une des revendications précédentes, **caractérisé en ce que** le deuxième matériau est à base de silicium monocristallin.

6. Assemblage selon l'une des revendications précédentes, **caractérisé en ce que** l'ouverture (4) comporte une section comprise entre 0,5 et 2 mm.

7. Pièce d'horlogerie **caractérisée en ce qu'**elle comporte au moins un assemblage selon l'une des revendications précédentes.

8. Procédé d'assemblage d'un organe (5, 15) en un premier matériau dans une pièce (3) en un deuxième matériau ne comprenant pas de domaine plastique, ledit procédé comportant les étapes suivantes :
a) former la pièce (3) avec une ouverture (4) ;
b) introduire sans contrainte, dans l'ouverture (4), une partie (7, 27, 27', 27", 27"') de l'organe (5, 15) ;
c) déformer élastiquement et plastiquement la partie (7, 27, 27', 27", 27"') dudit organe dans l'ouverture (4) par rapprochement de deux outils (11, 13, 21) afin d'exercer une contrainte radiale (B) contre la paroi de la pièce (3) entourant l'ouverture (4) en sollicitant la déformation élastique de la pièce (3) pour solidariser l'assemblage de manière non destructive pour ladite pièce.

9. Procédé selon la revendication précédente, **caractérisé en ce que** la paroi externe de la partie (7, 27, 27', 27", 27"') dudit organe dans l'ouverture est sensiblement de forme correspondante à l'ouverture (4) de la pièce (3) afin d'exercer une contrainte radiale (B) sensiblement uniforme sur la paroi de la pièce (3) entourant l'ouverture (4).

10. Procédé selon la revendication 8 ou 9, **caractérisé en ce que** l'ouverture (4) de la pièce (3) est circulaire.

11. Procédé selon la revendication 8 ou 9, **caractérisé en ce que** l'ouverture (4) de la pièce (3) est asymétrique afin d'éviter les déplacements relatifs entre les éléments dudit assemblage.

12. Procédé d'assemblage selon l'une des revendications 8 à 11, **caractérisé en ce que**, lors de l'étape b), la différence entre la section (e₁) de l'ouverture (4) et la section externe (e₃) de la partie (7, 27, 27', 27", 27"') dudit organe dans l'ouverture (4) est d'environ 10 µm.

13. Procédé d'assemblage selon l'une des revendications 8 à 12, **caractérisé en ce que**, lors de l'étape c), la déformation exerce un serrage compris entre 8 et 20 µm.

14. Procédé d'assemblage selon l'une des revendications 8 à 13, **caractérisé en ce que**, lors des étapes b) et c), la partie (7, 27, 27', 27", 27"') de l'organe (5, 15) dans l'ouverture (4) est maintenue dans l'ouverture (4) à l'aide d'un des deux outils (11, 13, 21).

15. Procédé d'assemblage selon l'une des revendications 8 à 14, **caractérisé en ce que**, lors de l'étape b), la partie (7, 27, 27', 27", 27"') dudit organe dans l'ouverture (4) comporte un évidement (10, 30, 30', 30", 30"') conique afin, lors de l'étape d), de faciliter l'orientation radiale (B) de la contrainte induite par la déformation de ladite partie.

16. Procédé d'assemblage selon l'une des revendications 8 à 15, **caractérisé en ce que** le deuxième matériau est formé à base de silicium.

17. Procédé d'assemblage selon l'une des revendications 8 à 16, **caractérisé en ce que** le premier matériau est formé à base de métal ou d'alliage métallique.

18. Procédé d'assemblage selon l'une des revendications 8 à 17, **caractérisé en ce que** la pièce (3) est un mobile d'horlogerie.

19. Procédé d'assemblage selon l'une des revendications 8 à 17, **caractérisé en ce que** la pièce (3) est une ancre d'horlogerie.

20. Procédé d'assemblage selon l'une des revendications 8 à 17, **caractérisé en ce que** la pièce (3) est un spiral d'horlogerie.

21. Procédé d'assemblage selon l'une des revendications 8 à 17, **caractérisé en ce que** la pièce (3) est un résonateur.

22. Procédé d'assemblage selon l'une des revendications 8 à 17, **caractérisé en ce que** la pièce (3) est un MEMS.
